# EUROPEAN PATENT SPECIFICATION

(11) **EP 2 682 596 B1**
(45) Date of publication and mention of the grant of the patent: **14.01.2015**
(21) Application number: 12174773.7
(22) Date of filing: 03.07.2012
(51) Int. Cl.: F03D 1/00

(54) **A transport apparatus for a wind turbine rotor, a transportation system and a method for transporting at least two rotors**
Transportvorrichtung für einen Windturbinenrotor, Transportsystem und Verfahren zum Transportieren von mindestens zwei Rotoren
Dispositif de transport pour un rotor d'éolienne, système de transport et procédé de transport d'au moins deux rotors

(43) Date of publication of application: 08.01.2014
(73) Proprietor: Siemens Aktiengesellschaft, 80333 München (DE)
(72) Inventor: Poulsen, Henning, 6900 Skjern (DK); Lynderup, Henrik Fomsgaard, 8832 Skals (DK)

(56) References cited:
- EP-A1- 2 463 511
- DE-A1-102009 040 200
- US-A1- 2010 293 781
- US-A1- 2011 056 168

## Description

The present invention relates to a transport apparatus for a wind turbine, a transportation system and a method for transporting at least two rotors.

The installation of wind turbines is becoming more and more challenging. This is due to the fact that the dimensions of wind turbines have been increasing over the years. Another reason is that wind turbines tend to be mounted more and more in locations which are difficult to access, such as locations far out at sea.

This requires the transportation of wind turbines to become more effective, also to keep costs at bay.

US 2010/0293781 A1 describes installation vessels and methods for offshore wind turbine installation. In one embodiment, a cantilever mast is used to transfer of wind turbine components from an installation vessel to an offshore installation site and guide the transfer to prevent undesired swinging movements of the wind turbine components. In another embodiment, a main crane is used in cooperation with a guide arm to transfer and guide wind turbine components from an installation vessel to an offshore installation site.

US 2011/0056168 A1 describes systems and methods for installing a windmill. The system has a hoisting platform and a carrier. The hoisting platform is operatively connectable to at least one platform leg extending a distance above a base. The hoisting platform is positionable along the platform leg(s). The carrier receives at least one component of the windmill, and is positionable about the hoisting platform and movable thereby whereby the component(s) of the windmill is/are positionable for installation.

EP 2 463 511 A1 describes an arrangement for transporting a rotor of a wind turbine at sea comprising a vessel having a deck. Moreover, the arrangement comprises at least one rotor comprising in turn a hub and at least one blade affixed to the hub. The hub is positioned on the deck in such a way that the at least one blade is at least partially located above the sea surface and that the center axis of the hub is tilted in relation to the deck so as to increase the distance between the at least one blade and the sea surface. Furthermore, a method for transporting a wind turbine rotor at sea on a vessel having a deck is described; comprising the step of positioning a rotor with a hub and a blade on the deck in such a way that the center axis of the hub is tilted in relation to the deck so as to increase the distance between the blade and the sea surface.

It is one objective of the present invention to provide an approach to the transportation of wind turbines, which is more effective.

Accordingly, a transport apparatus for a wind turbine rotor is provided. The transport apparatus is configured for stacking with at least one other transport apparatus for a wind turbine rotor.

One idea of the present invention is to stack the wind turbine rotors on top of each other, thereby saving a lot of space. For example, this allows transporting a number of wind turbine rotors on a single vessel from a harbor, where the wind turbine rotors are loaded and stacked on top of each other, to an offshore installation site, where the wind turbine rotors are offloaded and assembled with corresponding wind turbine towers and wind turbine nacelles to form offshore wind turbines.

The wind turbine rotor comprises two, three or more blades attached to a hub of the wind turbine rotor, when the wind turbine rotor is arranged on the transport apparatus. In one example, the hub may comprise three connection points (herein after referred to as "three-blade-hub"), wherein one blade is connected to each of two of the connection points, when the wind turbine rotor is arranged on the transport apparatus. The third blade is not connected to the hub at this point in time, but is transported separately. When, for example, the offshore installation site is reached, then only the third blade is connected to the third connection point, and the fully assembled wind turbine rotor is connected to the nacelle of the wind turbine.

As used herein, the term "wind turbine" refers to an apparatus that generates electrical power from rotational energy generated from wind.

According to an embodiment, the transport apparatus comprises at least one first member for supporting the wind turbine rotor in a horizontal manner. Herein, "horizontal manner" means that the plane in which the wind turbine rotor substantially extends when loaded onto the transport apparatus is horizontal. As used herein, "horizontal" includes deviations from the horizontal between 0 and 30° maximum, preferably between 0 and 15° maximum, and even more preferably between 0 and 5° maximum.

According to a further embodiment, the transport apparatus comprises a plurality of first members forming a triangle. Preferably, the triangle is arranged horizontally, and the wind turbine rotor is arranged horizontally on the triangle. When arranged on the triangle, the wind turbine hub may be arranged so as to coincide with the center of the triangle, in particular, when three blades are attached to a three-blade hub. In the case of only two blades being attached to a three-blade hub, the hub is preferably arranged so as to balance the wind turbine rotor on the triangle. Typically, in this case the hub will be arranged close to one side of the triangle, i.e. close to one of the first members.

According to a further embodiment, the transport apparatus comprises at least one second member attached to the at least one first member, wherein, preferably, the first and/or second member is configured for connecting a hub of the wind turbine rotor thereto.

According to a further embodiment, the transport apparatus comprises a plurality of second members forming a rectangle. The rectangle, which is also to include a square, may be fastened at a number of positions to the triangle formed by the first members. Fastening can be achieved by welding or bolting, for example,

According to a further embodiment, the at least one first member or the at least one second member comprises at least one fastener for releasably connecting a hub of the wind turbine rotor thereto. Thereby, the wind turbine rotor can be attached to the transport apparatus in order to prevent movement of the wind turbine rotor relative to the transport apparatus during transport. The fastener may be formed as at least one bolt and/or bolt hole.

According to a further embodiment, the transport apparatus comprises at least one third member for the stacking of the transport apparatus with the at least one other transport apparatus in a vertical manner. Preferably, at least three or four third members are provided since this will ensure balanced stacking of the apparatuses. "Vertical manner" is also to include deviations from the vertical between 0 and 30° maximum, preferably between 0 and 15° maximum, and more preferably between 0 and 5° maximum.

According to a further embodiment, the at least one third member comprises connecting means for connecting the transport apparatus to the at least one other transport apparatus. This will prevent relative movement of the transport apparatuses during transport, for example on a vessel. Thus, the stacked configuration of the transport apparatuses may be maintained during transport.

According to a further embodiment, the connecting means are formed so as to engage the at least one other transport apparatus. Thereby, locking between the transport apparatuses is achieved, which will prevent horizontal relative movement of the transport apparatuses.

According to a further embodiment, the connecting means are formed as at least one cone configured to engage an opening in the at least one other transport apparatus. Thus, by lowering the at least one other transport apparatus onto the transport apparatus, engagement between the cone and the opening is made. And, by lifting the at least one other transport apparatus again, the at least one other transport apparatus is released from the transport apparatus.

The at least one transport apparatus comprises at least one wheel for moving the transport apparatus. Preferably, a plurality of wheels are provided which are grouped together so as to form so-called dollies. The at least one wheel or dolly allows for easy steering of the transport apparatus on the ground (e.g. at the harbour) or on the deck of a vessel.

According to a further embodiment, the at least one wheel is attached to at least one corner of the triangle formed by the first members. Preferably, two corners of the triangle each have a wheel or dolly attached to them. Thereby, the triangle may be supported in a balanced manner.

According to a further embodiment, the transport apparatus comprises a connecting device for connecting the transport apparatus to a tractor in a rotatable manner. Typically, the tractor is a harbor tractor. Preferably, the connecting device connects to the third corner of the triangle, which is not provided with the at least one wheel or dolly.

According to an embodiment, the first, second and/or third member is formed as a strut. The first, second and/or third member may be formed from steel. The triangle or rectangle may be formed by welding the corresponding members together.

Further, a transport system comprising at least two transporting apparatuses in accordance with the invention stacked on top of each other is provided. The transport system may also comprise a tractor, a crane and/or a vessel.

Even further, a method for transporting at least two wind turbine rotors is provided. The method comprises arranging each wind turbine rotor on a transport device in accordance with the present invention and stacking the at least two transport apparatuses on top of each other.

Further objects, features and advantages of the present invention will become apparent from the subsequent description and depending claims, taken into conjunction with the accompanying drawings in which:
- Fig. 1: is a side view of a transport system according to one embodiment;
- Fig. 2: is a top view of the transport system of Fig. 1;
- Fig. 3: shows further details of the transport systems of Fig. 1;
- Fig. 4: shows further details of the transport systems of Fig. 1;
- Fig. 5: shows a top view of the transport system of Fig. 1 in a loaded state; and
- Fig. 6: shows a variation over Fig. 5.

In the Figures, like reference numbers designate like or functionally equivalent elements, unless otherwise indicated.

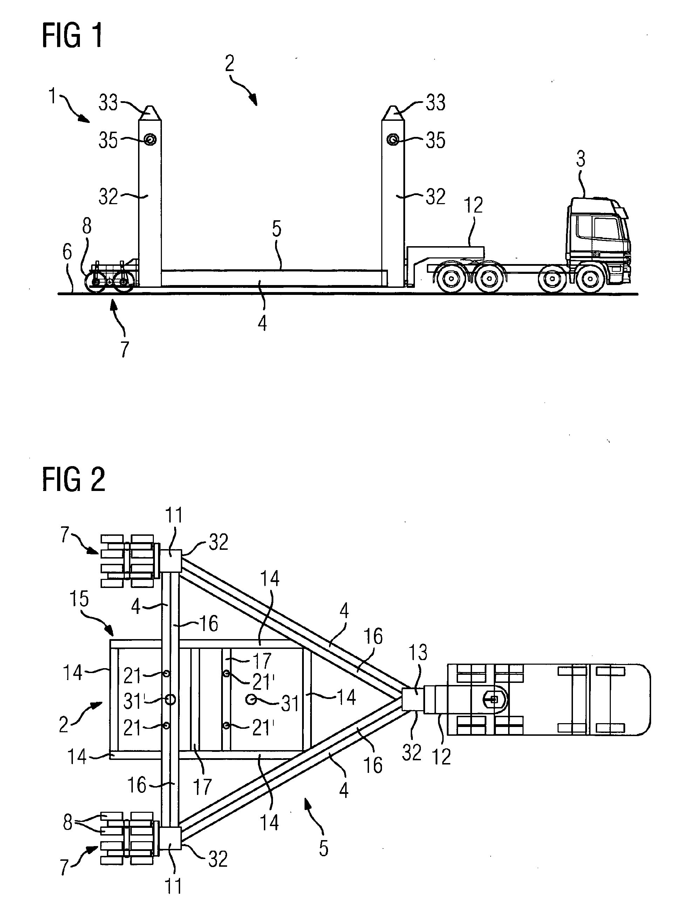

Fig. 1 shows a side view of a transport system 1 according to an embodiment, and Fig. 2 shows a top view from Fig. 1.

The transport system 1 comprises a transport apparatus 2 being towed by a harbor tractor 3.

The transport apparatus 2 comprises three first members 4 formed as struts. The first members 4 are connected at their respective ends to one another to form a triangle 5. During operation, the triangle 5 is orientated horizontally. The ground level is indicated at 6. Dollies 7 are attached to two corners 11 of the triangle 5. The dolly 7 may also be attached to the triangle at other positions. Each dolly 7 comprises a plurality of wheels 8. A connecting device 12 of the transport apparatus 2 connects to the harbor truck 3 in a rotatable manner. The harbor truck 3 comprises equipment (not shown) which allows lifting the connecting device 12 off the ground level 6 in order to move the transport apparatus 2 on the dollies 7. Preferably, the connecting device 12 connects to the third corner 13 of the triangle 5, which is not provided with a dolly 7.

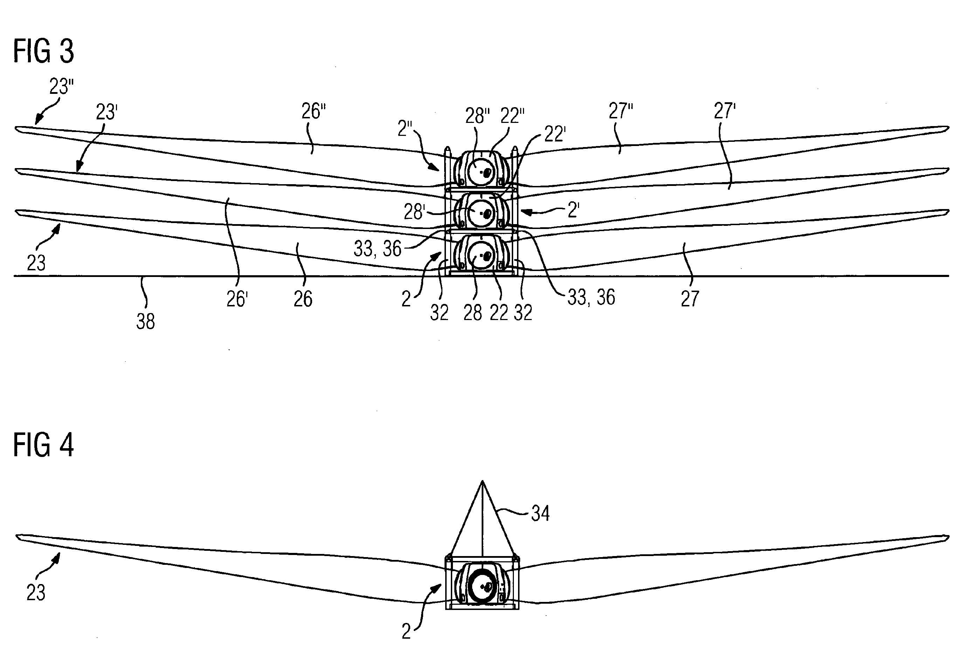

Further, the transport apparatus 2 comprises second members 14 formed as struts. The second members 14 are connected at their respective ends to one another to form a rectangle 15. The rectangle 15 is attached, for example welded or bolted, at positions 16 to the triangle 5. Additional second members 17, also formed as struts, are arranged so as to reinforce the rectangle 15. The second members 14, 17 comprise one or more bolts or bolt holes 21, 21' for attaching a hub 22 of a wind turbine rotor 23 (see Figs. 3 and 4) to the transport apparatus 2.

The rotor 23 as shown in Figs. 3 and 4 may be formed with a hub 22 being configured for connecting three blades 26, 27 and 28 thereto at their respective roots. When a rotor 23 comprising three blades 26, 27, 28 is attached to the transport apparatus 2, the center of gravity 31 of the rotor 23 will be arranged in the middle of the triangle 5 as shown in Fig. 2. In this case, the hub 22 may be connected to the transport apparatus 2 using the bolt holes 21' and suitable bolts (not shown). However, in some cases, it may be desirable to transport the rotor 23 by having only two blades 26, 27 (see Fig. 3) connected to the hub 22, while the third blade 28 is transported separately, i.e. separate from the rotor 23 arranged on the transport apparatus 2. In this case, the center of gravity 31' of the rotor 23 will be arranged in the vicinity of one of the first members 4. In this case, the hub 22 may be attached to the first member 4 using bolt holes 21 and corresponding bolts (not shown).

Also, the transport apparatus 2 may serve as a support or jig to assemble the rotor 23, e.g. to mount the blades 26, 27, 28 to the hub 22. Having regard to the prior art, where a so called elephant foot is used for this purpose, the present approach avoids a separate piece of equipment for assembling the rotor 23.

Further, the transport apparatus 2 comprises third members 32 formed as struts. The third members 32 are orientated vertically, i.e. pointing upwards. The third members 32 may be arranged each on one of the corners 11, 13 of the triangle 5. Also, the third members 32 may serve as connecting points for connecting the first members 4 to one another. For example, the first members 4 may be welded to the third members 32 at the respective ends.

The third members 32 each comprise a cone 33 at their upwards facing ends. At their downwards facing, the third members 32 are connected to the corners 11, 13 of the triangle 5 as mentioned above. The dollies 7 may also connect to the third members 32.

Fig. 3 illustrates that for example three transport apparatuses 2, 2', 2" may be stacked on top of each other. To this end, each transport apparatus 2', 2" is picked up by a lifting device 34 (see Fig. 4) of a crane, which is also part of the transport system 1. The lifting device 34 may comprise a number of slings. The lifting device 34 may attach to the third members 32 at connecting points 35 (see Fig. 1). When stacking the transport apparatuses 2, 2', 2" on top of each other, the cones 33 engage corresponding holes 36. Thus, the transport apparatuses 2, 2', 2" cannot move horizontally relative to each other.

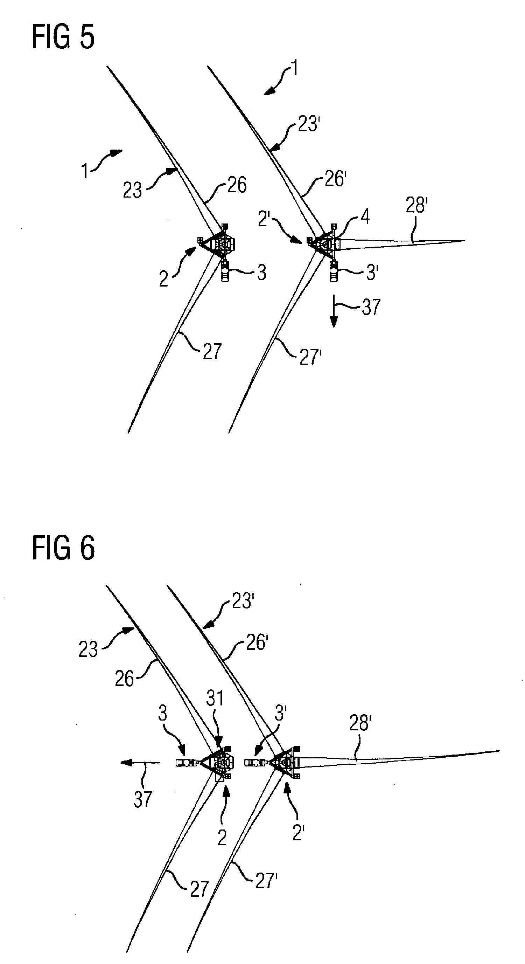

At the harbor, the rotors 23, 23', 23" are initially loaded onto a respective transport apparatus 2, 2', 2" either in a two-blade - or a three-blade-configuration (Fig. 5 and 6 each show both configurations). Thereafter, the harbor tractor 3 pulls each transport apparatus 2, 2', 2" to a vessel (as illustrated in Figs. 5 and 6). As shown in Fig. 5, the harbor truck 3 may pull the transportation apparatus 2 such that one first member 4 is arranged in line with the direction 37 of transport. As shown in Fig. 6, the harbor tractor 3 may also pull the transport apparatus 2 such that the direction of transport 37 passes through the center 31 of gravity of the triangle 5. Also, when only two blades 26, 27 are attached to a three-blade hub 22 (two-blade-configuration), two or more transport apparatuses 2, 2' with respective rotors 23, 23' may be moved and arranged in an overlapping relationship as shown in Fig. 5 and 6.

When the harbor trucks 3, 3' towing the transport apparatuses 2, 2', reach the vessel, the crane lifts the transport apparatuses 2, 2' with their respective rotors 23, 23' onto the deck 38 (see Fig. 3) of the vessel and stacks the transportation apparatuses 2, 2', 2" on top of each other. Accordingly, the rotors 23, 23', 23" are then also stacked vertically on top of each other. The most bottom transport apparatus 2 may be fastened, e.g. using bolts or by welding, to the deck 38 or another part of the vessel. The transport apparatus 2' may be locked or otherwise fastened to the transport apparatus 2. Similarly, the transport apparatus 2" may be locked or otherwise fastened to the transport apparatus 2'. For the purpose of locking, the cones 33 may be connected to the holes 36 using a locking pin (not shown), for example. In this manner, the rotors 23, 23', 23" may be safely transported even through rough sea. Other ways of fastening the transport apparatuses 2, 2', 2" to the vessel are also possible.

On the vessel or, in particular, on the deck 38, the rotors 23, 23' may be arranged as already shown in Fig. 5, i.e. arranging the rotors 23, 23' in two-blade and three-blade-configuration in an overlapping relationship, when seen from above. Numerous rotors 23 in two-blade-configuration may be arranged in an overlapping relationship with each other and with a single rotor 23' in a three-blade-configuration at one end.

Also, it is possible to arrange the rotors 23, 23', 23" at a slight angle to the horizontal on a respective transport apparatus 2, 2', 2", which will ensure that the tips of the blades 28, 28', 28" pointing out at sea and beyond the perimeter of the vessel stay clear of the surface of the sea by a sufficient distance. This will prevent collision of the tips of the blades 28, 28', 28", when the vessel moves through rough sea, in particular.

Although the present invention has been described in accordance with preferred embodiments, it is obvious for a person skilled in the art that modifications are possible in all embodiments.

For example, instead of the triangle 5 and the rectangle 15, the first and second members 4, 14 may be arranged in other ways, i.e. to form structures of different shape.

## Claims

1. A transport apparatus (2) for a wind turbine rotor (23), the transport apparatus (2) being configured for stacking with at least one other transport apparatus (2', 2") for a wind turbine rotor (23', 23''), the transport apparatus comprising at least one wheel (7) for moving the transport apparatus (2).

2. The transport apparatus of claim 1, comprising at least one first member (4) for supporting the wind turbine rotor (23) in such a manner that a plane in which the wind turbine rotor (23) substantially extends when loaded onto the transport apparatus is horizontal.

3. The transport apparatus of claim 2, comprising a plurality of first members (4) forming a triangle (5).

4. The transport apparatus of claim 2 or 3, comprising at least one second member (14) attached to the at least one first member (4), wherein the first member (4) and/or second member (14) is configured for connecting a hub (22) of the wind turbine rotor (23) thereto.

5. The transport apparatus of claim 4, comprising a plurality of second members (14) forming a rectangle (15).

6. The transport apparatus of one of claims 2 to 5, wherein the at least one first member (4) or the at least one second member (14) comprises at least one fastener (21, 21') for releasably connecting a hub (22) of the wind turbine rotor (23) thereto.

7. The transport apparatus of one of claims 1 to 6, comprising at least one third member (32) for the stacking of the transport apparatus (2) with the at least one other transport apparatus (2', 2") in a vertical manner.

8. The transport apparatus of claim 7, wherein the at least one third member (32) comprises connecting means (33) for connecting the transport apparatus (2) to the at least one other transport apparatus (2', 2").

9. The transport apparatus of claim 8, wherein the connecting means (33) are formed so as to engage the at least one other transport apparatus (2', 2").

10. The transport apparatus of claim 9, wherein the connecting means (33) are formed as at least one cone configured to engage an opening (36) in the at least one other transport apparatus (2', 2").

11. The transport apparatus of one of claims 1 to 10, wherein at least one wheel (8) is attached to a corner (11) of the triangle (5) formed by the first members (4).

12. The transport apparatus according to one of claims 1 to 11, comprising a connecting device (12) for connecting the transport apparatus (2) to a tractor (3) in a rotatable manner.

13. A transportation system (1) comprising at least two transport apparatuses (2, 2', 2") according to one of claims 1 to 12 stacked on top of each other.

14. A method for transporting at least two wind turbine rotors (23, 23', 23") comprising:
arranging each wind turbine rotor (23, 23', 23") on a transport apparatus (2, 2', 2") in accordance with one of claims 1 to 12, and
stacking the at least two transport apparatuses (2, 2', 2") on top of each other.

## Patentansprüche

1. Transportvorrichtung (2) für einen Rotor (23) einer Windenergieanlage, wobei die Transportvorrichtung (2) zum Stapeln mit mindestens einer anderen Transportvorrichtung (2', 2") für einen Rotor (23', 23'') einer Windenergieanlage konfiguriert ist, wobei die Transportvorrichtung mindestens ein Rad (7) zum Bewegen der Transportvorrichtung (2) umfasst.

2. Transportvorrichtung nach Anspruch 1, die mindestens ein erstes Element (4) zum derartigen Halten des Rotors (23) einer Windenergieanlage umfasst, dass eine Ebene, in der der Rotor (23) einer Windenergieanlage im Wesentlichen verläuft, wenn er auf die Transportvorrichtung geladen ist, horizontal ist.

3. Transportvorrichtung nach Anspruch 2, die mehrere erste Elemente (4) umfasst, welche ein Dreieck (5) bilden.

4. Transportvorrichtung nach Anspruch 2 oder 3, die mindestens ein zweites Element (14) umfasst, das an dem mindestens einen ersten Element (4) befestigt ist, wobei das erste Element (4) und/ oder das zweite Element (14) zum Verbinden einer Nabe (22) des Rotors (23) einer Windenergieanlage damit konfiguriert ist.

5. Transportvorrichtung nach Anspruch 4, die mehrere zweite Elemente (14) umfasst, welche ein Viereck (15) bilden.

6. Transportvorrichtung nach einem der Ansprüche 2 bis 5, bei der das mindestens eine erste Element (4) oder das mindestens eine zweite Element (14) mindestens ein Befestigungselement (21, 21') zum lösbaren Verbinden einer Nabe (22) des Rotors (23) einer Windenergieanlage damit umfasst.

7. Transportvorrichtung nach einem der Ansprüche 1 bis 6, die mindestens ein drittes Element (32) zum Stapeln der Transportvorrichtung (2) mit der mindestens einen anderen Transportvorrichtung (2', 2'') auf vertikale Weise umfasst.

8. Transportvorrichtung nach Anspruch 7, wobei das mindestens eine dritte Element (32) Verbindungsmittel (33) zum Verbinden der Transportvorrichtung (2) mit der mindestens einen anderen Transportvorrichtung (2', 2'') umfasst.

9. Transportvorrichtung nach Anspruch 8, bei der die Verbindungsmittel (33) so geformt sind, dass sie in die mindestens eine andere Transportvorrichtung (2', 2'') eingreifen.

10. Transportvorrichtung nach Anspruch 9, bei der die Verbindungsmittel (33) als mindestens ein Kegel ausgebildet sind, der so konfiguriert ist, dass er in eine Öffnung (36) in der mindestens einen anderen Transportvorrichtung (2', 2'') eingreift.

11. Transportvorrichtung nach einem der Ansprüche 1 bis 10, bei der an einer Ecke (11) des von den ersten Elementen (4) gebildeten Dreiecks (5) mindestens ein Rad (8) befestigt ist.

12. Transportvorrichtung nach einem der Ansprüche 1 bis 11, die eine Verbindungseinrichtung (12) zum drehbaren Verbinden der Transportvorrichtung (2) mit einer Zugmaschine (3) umfasst.

13. Transportsystem (1), das mindestens zwei übereinandergestapelte Transportvorrichtungen (2, 2', 2'') nach einem der Ansprüche 1 bis 12 umfasst.

14. Verfahren zum Transportieren von mindestens zwei Rotoren (23, 23', 23'') einer Windenergieanlage, das Folgendes umfasst:
Anordnen jedes Rotors (23, 23', 23'') einer Windenergieanlage auf einer Transportvorrichtung (2, 2', 2'') gemäß einem der Ansprüche 1 bis 12 und
Übereinanderstapeln der mindestens zwei Transportvorrichtungen (2, 2', 2'').

## Revendications

1. Appareil de transport (2) pour un rotor d'éolienne (23), l'appareil de transport (2) étant configuré pour empilement avec au moins un autre appareil de transport (2', 2") pour un rotor d'éolienne (23', 23"), l'appareil de transport comprenant au moins une roue (7) pour déplacer l'appareil de transport (2).

2. Appareil de transport selon la revendication 1, comprenant au moins un élément (4) pour supporter le rotor d'éolienne (23) de telle façon qu'un plan dans lequel le rotor d'éolienne (23) s'étend sensiblement quand il est chargé sur l'appareil de transport, soit horizontal.

3. Appareil de transport selon la revendication 2, comprenant une pluralité de premiers éléments (4) formant un triangle (5).

4. Appareil de transport selon la revendication 2 ou 3, comprenant au moins un second élément (14) fixé à l'au moins un premier élément (4), dans lequel le premier élément (4) et/ou le second élément (14) sont configurés pour raccordement d'un moyeu (22) du rotor d'éolienne (23) à ceux-ci.

5. Appareil de transport selon la revendication 4, comprenant une pluralité de seconds éléments (14) formant un rectangle (15).

6. Appareil de transport selon l'une des revendications 2 à 5, dans lequel l'au moins un premier élément (4) ou l'au moins un second élément (14) comprend au moins une pièce de fixation (21, 21') pour y raccorder d'une manière amovible un moyeu (22) du rotor d'éolienne (23).

7. Appareil de transport selon l'une des revendications 1 à 6, comprenant au moins un troisième élément (32) pour l'empilement de l'appareil de transport (2) avec l'au moins un autre appareil de transport (2', 2") d'une manière verticale.

8. Appareil de transport selon la revendication 7, dans lequel l'au moins un troisième élément (32) comprend des moyens de raccordement (33) pour raccorder l'appareil de transport (2) à l'au moins un autre appareil de transport (2' 2").

9. Appareil de transport selon la revendication 8, dans lequel les moyens de raccordement (33) sont formés de façon à entrer en prise avec l'au moins un autre appareil de transport (2', 2").

10. Appareil de transport selon la revendication 9, dans lequel les moyens de raccordement (33) sont formés sous forme d'au moins un cône configuré pour entrer en prise avec une ouverture (36) aménagée dans l'au moins un autre appareil de transport (2', 2").

11. Appareil de transport selon l'une des revendications 1 à 10, dans lequel au moins une roue (8) est fixée à un sommet (11) du triangle (5) formé par les premiers éléments (4).

12. Appareil de transport selon l'une des revendications 1 à 11, comprenant un dispositif de raccordement (12) pour raccorder l'appareil de transport (2) à un tracteur (3) d'une manière permettant une rotation.

13. Système de transport (1) comprenant au moins deux appareils de transport (2, 2', 2") selon l'une des revendications 1 à 12 empilés les uns au-dessus des autres.

14. Procédé de transport d'au moins deux rotors d'éolienne (23, 23', 23"), comprenant :
- la mise en place de chaque rotor d'éolienne (23, 23', 23") sur un appareil de transport (2, 2', 2") conformément à l'une des revendications 1 à 12, et
- l'empilement des au moins deux appareils de transport (2, 2', 2") les uns au-dessus des autres.
